# DEMANDE DE BREVET EUROPEEN

(11) **EP 2 659 812 A1**
(43) Date de publication de la demande: **06.11.2013**
(21) Numéro de dépôt: 13166311.4
(22) Date de dépôt: 02.05.2013
(51) Int. Cl.: A47J 43/07, A47J 19/04

(54) **Appareil électroménager de préparation culinaire comportant un dispositif presse-purée**

(30) Priorité: 04.05.2012 FR 1254144
(71) Demandeur: SEB S.A., 69130 Ecully (FR)
(72) Inventeur: Hamelin, Franck, 50490 SAINT-SAUVEUR-LENDELIN (FR); Retour, Stéphane, 53470 COMMER (FR); Grassin, Stéphane, 53100 MOULAY (FR)
(74) Mandataire: Bourrières, Patrice

(57) **Abrégé**

Appareil électroménager de préparation culinaire comportant un dispositif presse-purée (10) comprenant une grille (13) comportant une zone de traitement munie de trous (15) au travers desquels les aliments à transformer en purée sont envoyés par une palette (14) entrainée en rotation, ladite grille (13) comprenant une jupe périphérique comportant un bord inférieur sur lequel la grille (13) peut reposer, caractérisé en ce que ledit appareil comporte une assiette (20) creuse comprenant une paroi périphérique inclinée en direction d'un fond présentant un contour adapté à la forme et aux dimensions du bord inférieur de la jupe de la grille, un écart inférieur à 5 mm s'établissant entre le contour du fond de l'assiette et le bord inférieur de la jupe lorsque la grille (13) repose dans le fond de l'assiette (20).

## Description

La présente invention concerne le domaine technique général des appareils de préparation culinaire comportant un dispositif presse-purée comprenant une grille au travers de laquelle les aliments à transformer en purée sont envoyés par une palette entrainée en rotation.

Il est connu, du brevet FR 1 437 573, un dispositif presse-purée pouvant être accouplé à un boîtier moteur destiné à être tenu à la main, le dispositif presse-purée comprenant une palette, entrainée en rotation par le boîtier moteur, qui vient à proximité immédiate d'une grille perforée afin de réaliser de la purée en forçant les aliments à passer au travers des trous de la grille.

Un tel dispositif presse-purée présente l'avantage de se présenter sous la forme d'un accessoire pouvant être accouplé à un boîtier moteur d'appareil de type mixeur plongeant, à la place du pied de mixage, afin d'offrir une fonction supplémentaire à l'appareil et permettre à l'utilisateur de réaliser des purées de légumes sans effort. En particulier, un tel accessoire presse-purée est particulièrement efficace pour réaliser des purées de pommes de terre, de type purée mousseline, très fines.

Toutefois, un tel dispositif presse-purée présente l'inconvénient de posséder une palette tournant à faible vitesse qui a tendance à repousser une partie des aliments en dehors de la zone de couverture de la grille de sorte que l'utilisateur est obligé de rechercher visuellement les aliments non traités pour déplacer le dispositif presse-purée en direction de ces derniers afin de les transformer en purée. De plus, les aliments transformés en purée peuvent venir masquer les aliments restant à transformer en purée de sorte que l'utilisateur peut laisser involontairement des morceaux d'aliments durs dans la purée, ce qui peut s'avérer gênant lorsque la purée est destinée à nourrir un bébé.

Pour remédier à cet inconvénient, l'utilisateur peut être tenté de passer plusieurs fois au même endroit avec le dispositif presse-purée, cependant ceci peut conduire à la réalisation d'une purée collante sous l'effet du cisaillement répété de la pomme de terre par la palette.

Un tel dispositif presse-purée présente également l'inconvénient de posséder une palette rotative dont le bord d'attaque est surélevé par rapport au bord inférieur de la grille, notamment dans la partie centrale de la grille tronconique, de sorte qu'il résulte un espace entre le bord d'attaque de la palette rotative et le plan du bord inférieur de la grille. En conséquence, les aliments disposés dans cet espace ne sont pas captés par la palette, lors de la rotation de cette dernière, et ne sont donc pas transformés en purée.

L'invention qui suit vise à pallier ces inconvénients en proposant un appareil électroménager de préparation culinaire comportant un dispositif presse-purée dans lequel les aliments sont transformés en purée en étant envoyés au travers d'une grille par une palette entrainée en rotation et comprenant une assiette qui permette de simplifier la réalisation de purées et en particulier de garantir un traitement complet de l'ensemble des aliments par le dispositif presse-purée.

Le but de l'invention est atteint par un appareil électroménager de préparation culinaire comportant un dispositif presse-purée comprenant une grille comportant une zone de traitement munie de trous au travers desquels les aliments à transformer en purée sont envoyés par une palette entrainée en rotation, la grille comprenant une jupe périphérique comportant un bord inférieur sur lequel la grille peut reposer, **caractérisé en ce que** l'appareil comporte une assiette creuse comprenant une paroi périphérique inclinée en direction d'un fond présentant un contour adapté à la forme et aux dimensions du bord inférieur de la jupe de la grille, un écart inférieur à 5 mm s'établissant entre le contour du fond de l'assiette et le bord inférieur de la jupe lorsque la grille repose dans le fond de l'assiette.

Une telle caractéristique permet d'avoir une assiette dont la forme coopère avec la forme de la grille du dispositif presse-purée pour garantir une meilleure efficacité du dispositif presse-purée.

Selon une autre caractéristique de l'invention, le fond présente une surface supérieure venant à proximité de la trajectoire balayée par un bord d'attaque de la palette lors de son entrainement en rotation.

Selon une autre caractéristique de l'invention, un espace de moins de 3 mm est ménagé entre la surface supérieure du fond et le bord d'attaque de la palette lorsque le bord inférieur de la jupe repose sur le contour du fond.

Selon une autre caractéristique de l'invention, le fond est en relief et s'engage dans le volume inscrit dans la jupe périphérique de la grille lorsque le bord inférieur de la jupe repose sur le fond de l'assiette.

Selon une autre caractéristique de l'invention, les trous de la grille sont portés par une paroi tronconique balayée par la palette, le fond de l'assiette comportant une paroi tronconique venant à proximité de la trajectoire balayée par le bord d'attaque de la palette.

Selon encore une autre caractéristique de l'invention, le dispositif presse-purée comporte un arbre d'entrainement comprenant une extrémité débouchant au centre de la grille, la palette étant fixée à l'arbre d'entrainement au moyen d'un élément de fixation.

Selon encore une autre caractéristique de l'invention, le fond en relief comporte une cavité centrale ménageant un espace dans lequel l'élément de fixation vient s'engager lorsque le bord inférieur de la jupe repose sur le contour du fond de l'assiette.

Selon encore une autre caractéristique de l'invention, la paroi périphérique de l'assiette est inclinée à plus de 45° par rapport au fond de l'assiette.

Selon encore une autre caractéristique de l'invention, l'appareil comporte un boîtier moteur destiné à être tenu à la main venant s'accoupler à une extrémité du dispositif presse-purée et la palette est entrainée en rotation par le boîtier moteur.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue en perspective d'un appareil électroménager de préparation culinaire selon un mode particulier de réalisation de l'invention, le dispositif presse-purée étant représenté accouplé à un boîtier moteur et en appui contre le fond de l'assiette;
- la figure 2 est une autre vue en perspective du dispositif presse-purée et de l'assiette de la figure 1, le dispositif presse-purée étant représenté éloigné de l'assiette;
- la figure 3 est une vue de dessus du dispositif presse-purée reposant sur l'assiette;
- les figures 4 et 5 sont respectivement des vues partielles, en coupe, selon les lignes IV-IV et V-V de la figure 3.

Seuls les éléments nécessaires à la compréhension de l'invention ont été représentés. Pour faciliter la lecture des dessins, les mêmes éléments portent les mêmes références d'une figure à l'autre.

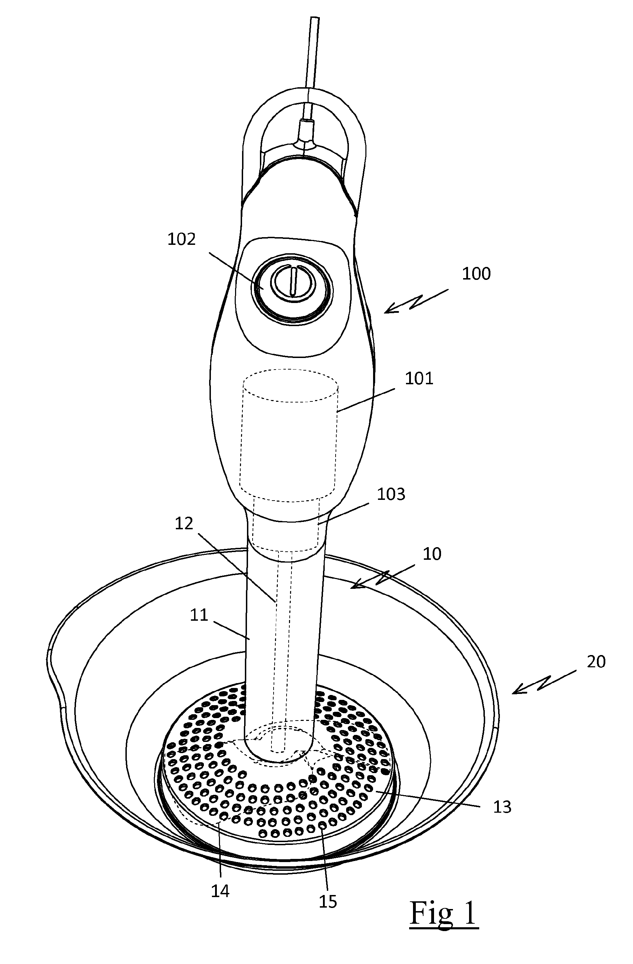

La figure 1 représente un appareil électroménager de préparation culinaire comportant un boîtier moteur 100 de mixeur plongeant, un dispositif presse-purée 10 accouplé de manière amovible à une extrémité longitudinale du boîtier moteur 100 et une assiette 20 de préparation destinée à recevoir les aliments à réduire en purée.

Le boîtier moteur 100 referme, de manière connue en soi, un moteur 101, représenté en pointillé sur la figure 1, dont le fonctionnement est commandé par un bouton de commande 102, le boîtier moteur 100 renfermant également un réducteur de vitesse 103 comportant un entraîneur rotatif, non visible sur les figures, présentant une vitesse de rotation réduite par rapport à la vitesse de rotation du moteur 101.

Le dispositif presse-purée 10 comporte un fût 11 tubulaire, avantageusement réalisé en acier inox ou en matière plastique, qui renferme un arbre d'entrainement 12 guidé par des paliers, non représentés sur les figures, l'extrémité supérieure de l'arbre d'entrainement 12 étant munie d'un embout venant s'accoupler avec l'entraîneur rotatif du réducteur de vitesse lorsque le dispositif presse-purée 10 est accouplé au boîtier moteur 100.

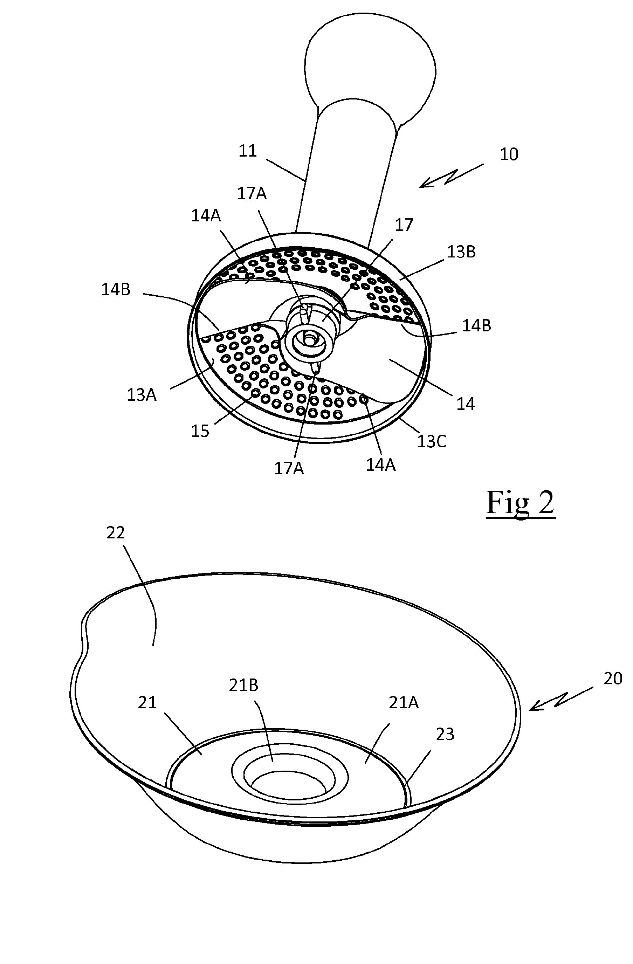

L'extrémité inférieure du fût 11 tubulaire supporte une grille 13 perforée qui est balayée par une palette 14, visible sur la figure 2, entrainée en rotation par l'arbre d'entrainement 12, la palette 14 présentant la forme d'une hélice comprenant un bord d'attaque 14A distant de plus de 5 mm de la grille 13 et un bord de fuite 14B s'approchant à proximité de la grille 13 de sorte que les aliments happés par le bord d'attaque 14A de la palette 14 soient comprimés contre la grille 13 lors de la rotation de la palette 14.

La grille 13 est avantageusement obtenue par emboutissage d'une tôle d'inox d'une épaisseur de l'ordre de 0,7 mm et présente une paroi tronconique 13A munie en son sommet d'une partie hexagonale en saillie, non visible sur les figures, venant s'insérer dans une forme hexagonale complémentaire de l'extrémité inférieure du fût 11 afin de brider la grille 13 en rotation sur le fût 11. Une telle grille est décrite plus en détails dans la demande de brevet FR 11 56400 déposée par la demanderesse.

La grille 13 comporte une jupe 13B périphérique, cylindrique, venant dans le prolongement de la paroi tronconique 13A, la jupe 13B comportant un bord inférieur 13C sur lequel la grille 13 vient reposer lorsque le dispositif presse-purée 10 est disposé verticalement sur un plan de travail.

La grille 13 est spécialement adaptée à la réalisation de purée mousseline et comporte à cet effet une série de trous circulaires 15, de petite taille, répartis sur une zone de traitement de la paroi tronconique 13A balayée par la palette 14 lors de son entrainement en rotation par le boîtier moteur 100, cette zone de traitement correspondant sensiblement à une bande s'étendant radialement sur les deux tiers du rayon de la grille 13 à partir de la périphérie de cette dernière.

Ces trous circulaires 15 présentent avantageusement un diamètre inférieur à 3 mm, et de préférence de l'ordre de 2.5 mm, et sont répartis selon quatre spirales hélicoïdales décalées angulairement de 90° les unes des autres.

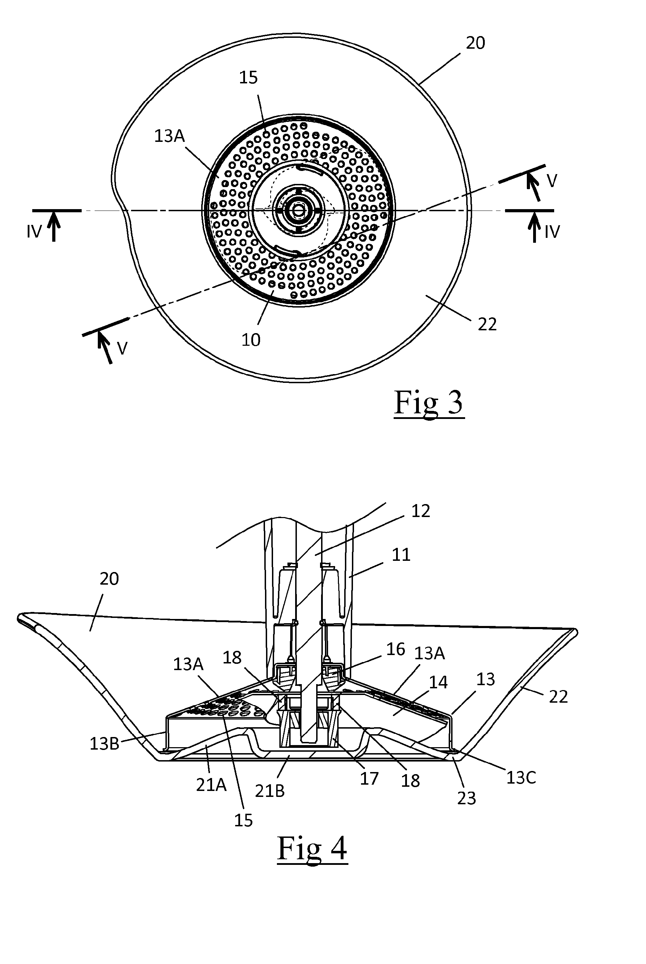

Conformément aux figures 2 et 4, la grille 13 est fixée axialement à l'extrémité du fût 11 en étant pris en sandwich entre le fût 11 et une pièce entretoise 16 venant se placer sous la grille 13, la palette 14 étant maintenue en appui contre la pièce entretoise 16 au moyen d'un écrou de serrage 17 venant se visser sur l'extrémité inférieure filetée de l'arbre 12 d'entrainement, l'écrou de serrage 17 comportant deux ailettes radiales 17A facilitant sa préhension.

La pièce entretoise 16 est dimensionnée de telle sorte qu'il résulte un léger jeu, de l'ordre de 1 mm entre la palette 14 et la grille 13 et est préférentiellement moulée dans un matériau thermoplastique de type polyacétal (POM) présentant l'avantage de posséder de bonnes propriétés de glissement et une bonne résistance à l'usure.

De manière préférentielle, un joint 18 en matériau souple, de type caoutchouc nitrile (NBR), est interposé entre la palette 14 et l'écrou de serrage 17 afin d'autoriser un léger déplacement axial de la palette 14 en direction de l'écrou de serrage 17 lorsque la palette 14 rencontre des aliments durs.

Plus particulièrement selon l'invention, l'assiette 20 de préparation est creuse et comprend un fond 21 entouré d'une paroi périphérique 22 inclinée en direction du fond 21, le fond 21 de l'assiette présentant un contour 23 adapté à la forme et aux dimensions du bord inférieur 13C de la jupe 13B de la grille de manière à ce que le bord inférieur 13C de la grille soit guidé par la paroi périphérique 22 de l'assiette en direction du contour 23 et vienne reposer sensiblement sur le contour 23 lorsque la jupe 13B repose au fond de l'assiette.

De manière préférentielle, le contour 23 du fond 21 de l'assiette présente un diamètre semblable au diamètre de la jupe 13B de la grille et la paroi périphérique 22 présente une forte inclinaison, supérieure à 45°, par rapport au fond 21 de l'assiette. A titre d'exemple, le fond 21 de l'assiette et la jupe 13B de la grille présentent un diamètre de l'ordre 9 cm, la paroi périphérique 22 de l'assiette présentant un diamètre externe de l'ordre de 16 cm pour une hauteur totale de l'ordre de 4 cm.

Conformément à la figure 4, le fond 21 de l'assiette est avantageusement en relief et s'engage dans le volume inscrit dans la jupe 13B périphérique de la grille lorsque le bord inférieur 13C de la jupe repose sur le fond 21 de l'assiette, le fond 21 comportant une paroi tronconique 21A qui s'étend du contour 23 jusqu'à une cavité centrale 21B ménagée au centre de l'assiette 20, cette cavité centrale 21B formant un espace dans lequel l'écrou de serrage 17 de la palette 14 vient s'engager lorsque le bord inférieur 13C de la jupe repose sur le contour 23 du fond de l'assiette.

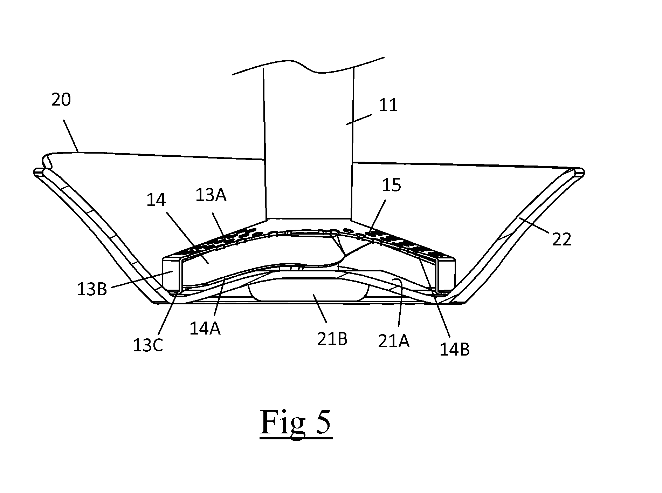

Conformément à la figure 5, la paroi tronconique 21A du fond de l'assiette comporte une surface supérieure venant à proximité immédiate de la trajectoire parcourue par le bord d'attaque 14A de la palette 14 lors de la rotation de cette dernière de sorte que l'ensemble des aliments situés dans le fond 21 de l'assiette soit happé par la palette 14, les aliments présents dans la cavité centrale 21B étant éjectés de cette dernière par la rotation des ailettes 17A de l'écrou de serrage 17.

On obtient ainsi un appareil électroménager de préparation culinaire permettant la réalisation d'une purée fine et homogène avec une très grande facilité, le risque de laisser une partie des aliments non transformée en purée étant très faible.

En effet, l'utilisateur n'a qu'à disposer les aliments cuits, tels que des pommes de terre, dans l'assiette 20 puis à amener la palette 14 entrainée en rotation par le boîtier moteur 100 au contact des aliments cuits, pour que la palette 14 attrape ces aliments et force leur passage au travers des trous 15 de la grille 13.

De plus, l'utilisation d'une telle assiette présente l'avantage de guider le dispositif presse-purée 10 vers le fond 21 de l'assiette, où les aliments sont ramenés automatiquement par la paroi périphérique 22 fortement inclinée de l'assiette 20, de sorte que les aliments présents dans l'assiette 20 sont rapidement transformés en purée par un simple mouvement vertical, de haut en bas, du dispositif presse purée 10 vers le fond 21 de l'assiette, une telle transformation pouvant s'effectuer en une seule passe du dispositif presse-purée 10, évitant ainsi le cisaillement excessif des aliments et la réalisation d'une purée collante.

Enfin, la forme en relief du fond 21 de l'assiette qui vient à proximité immédiate du bord d'attaque 14A de la palette présente l'avantage d'éviter qu'une partie des aliments disposés dans le fond 21 de l'assiette ne soit pas happée par la palette 14, ce qui permet de garantir une purée d'une finesse homogène, démunie de morceaux.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention non représentée, le dispositifif presse-purée pourra être solidaire du boîtier moteur de manière non démontable.

Ainsi, dans une autre variante de réalisation, le dispositif presse-purée pourra comprendre plusieurs grilles interchangeables se différenciant l'une de l'autre par la taille et/ou la forme des trous de la grille, les grilles pouvant se monter l'une à la place de l'autre afin de permettre la préparation de purées avec des textures différentes.

## Revendications

1. Appareil électroménager de préparation culinaire comportant un dispositif presse-purée (10) comprenant une grille (13) comportant une zone de traitement munie de trous (15) au travers desquels les aliments à transformer en purée sont envoyés par une palette (14) entrainée en rotation, ladite grille (13) comprenant une jupe (13B) périphérique comportant un bord inférieur (13C) sur lequel la grille (13) peut reposer, **caractérisé en ce que** ledit appareil comporte une assiette (20) creuse comprenant une paroi périphérique (22) inclinée en direction d'un fond (21) présentant un contour (23) adapté à la forme et aux dimensions du bord inférieur (13C) de la jupe (13B) de la grille, un écart inférieur à 5 mm s'établissant entre le contour (23) du fond de l'assiette et le bord inférieur (13C) de la jupe lorsque la grille (13) repose dans le fond (21) de l'assiette (20).

2. Appareil électroménager de préparation culinaire selon la revendication 1, **caractérisé en ce que** le fond (21) présente une surface supérieure venant à proximité de la trajectoire balayée par un bord d'attaque (14A) de la palette (14) lors de son entrainement en rotation.

3. Appareil électroménager de préparation culinaire selon la revendication 2, **caractérisé en ce qu'**un espace de moins de 3 mm est ménagé entre ladite surface supérieure du fond (21) et le bord d'attaque (14A) de la palette (14) lorsque le bord inférieur (13C) de la jupe (13B) repose sur le contour (23) du fond (21).

4. Appareil électroménager de préparation culinaire selon l'une quelconque des revendications 2 à 3, **caractérisé en ce que** le fond (21) est en relief et s'engage dans le volume inscrit dans la jupe (13B) périphérique de la grille lorsque le bord inférieur (13C) de la jupe (13B) repose sur le fond (21) de l'assiette (20).

5. Appareil électroménager de préparation culinaire selon la revendication 4, **caractérisé en ce que** les trous (15) de la grille sont portés par une paroi tronconique (13A) balayée par la palette (14) et **en ce que** le fond (21) de l'assiette comporte une paroi tronconique (21A) venant à proximité de la trajectoire balayée par le bord d'attaque (14A) de la palette (14).

6. Appareil électroménager de préparation culinaire selon l'une quelconque des revendications 1 à 5, **caractérisé en ce que** le dispositif presse-purée (10) comporte un arbre d'entrainement (12) comprenant une extrémité débouchant au centre de la grille (13) et **en ce que** la palette (14) est fixée à l'arbre d'entrainement (12) au moyen d'un élément de fixation (17).

7. Appareil électroménager de préparation culinaire selon la revendication 6, **caractérisé en ce que** le fond (21) en relief comporte une cavité centrale (21B) ménageant un espace dans lequel l'élément de fixation (17) vient s'engager lorsque le bord inférieur (13C) de la jupe repose sur le contour (23) du fond (21) de l'assiette.

8. Appareil électroménager de préparation culinaire selon l'une quelconque des revendications 1 à 7, **caractérisé en ce que** la paroi périphérique (22) de l'assiette est inclinée à plus de 45° par rapport au fond (21) de l'assiette.

9. Appareil électroménager de préparation culinaire selon l'une quelconque des revendications 1 à 8, **caractérisé en ce qu'il** comporte un boîtier moteur (100) destiné à être tenu à la main venant s'accoupler à une extrémité du dispositif presse-purée (10) et **en ce que** la palette (14) est entrainée en rotation par le boîtier moteur (100).
